# EUROPÄISCHE PATENTANMELDUNG

(11) **EP 1 930 114 A1**
(43) Veröffentlichungstag der Anmeldung: **11.06.2008**
(21) Anmeldenummer: 07033544.3
(22) Anmeldetag: 07.11.2007
(51) Int. Cl.: B23K 26/42, F16P 1/06, F16P 3/00, B23K 37/00

(54) **Laserschutzvorrichtung mit Sicherheitsabschaltung umfassend eine passive Laserschutzwand und eine Laserschutzfolie mit einem mit dem Laser verbundenen Sensor**

(30) Priorität: 10.11.2006 DE 102006053579
(71) Anmelder: JENOPTIK Automatisierungstechnik GmbH, 07745 Jena (DE)
(72) Erfinder: Wilhelmi, Bernd, Prof. Dr., 07749 Jena (DE); Feistel, Ulf, 07646 Laasdorf (DE)
(74) Vertreter: Schaller, Renate

(57) **Zusammenfassung**

Die Erfindung betrifft eine Laserschutzvorrichtung mit Sicherheitsabschaltung, umfassend eine passive Laserschutzwand (1), die die Strahlungsenergie einer auftreffenden Strahlung eines Lasers (2) einer Lasermaterialbearbeitungsanlage deponiert und eine in Richtung der Laserstrahlung vorgeordnete Laserschutzfolie (3), die eine beim Auftreffen von Laserstrahlung detektierbare Veränderung bewirkt sowie wenigstens ein Sensor (4), der über einen Schwellwertschalter (5) mit dem Laser (2) verbunden ist, um bei Überschreitung bzw. Unterschreitung eines Schwellwertes durch das empfangene Detektorsignal den Laser (2) abzuschalten.

## Beschreibung

Die Erfindung betrifft eine Laserschutzvorrichtung zur Anwendung bei der Lasermaterialbearbeitung.
Bei der Lasermaterialbearbeitung können Gefährdungen einerseits durch die direkte Einwirkung der Laserstrahlung auf Menschen oder empfindliche Objekte z.B. in Folge von Fehlsteuerungen und andererseits durch die im Verlauf der Bearbeitung ablatierten Materialien in gasförmiger, flüssiger oder Partikelform entstehen.
Quantitative Angaben zu den für den Menschen ungefährlichen Laserbestrahlungen als Funktion von den Strahlungseigenschaften (Wellenlänge, Leistung bzw. Pulsenergie, zeitliche Modulation, zeitliche Einwirkungsdauer) sind in nationalen und internationalen Vorschriften geregelt.
Die Gefährdung durch ablatiertes Material ist zumeist nicht laserspezifisch und wird in allgemeinen Vorschriften zur Vermeidung von Gefährdungen durch gasförmige Substanzen sowie Aerosole und Staubpartikel geregelt.
Besondere Gefahren entstehen beispielsweise bei der Bearbeitung von organischen Materialien (beispielsweise Naturstoffe und Kunststoffe wie Textilien, Leder, Verbundwerkstoffe), wo die Abbrände schon in kleinen Konzentrationen gesundheitsgefährdend sein können. Bei anorganischen Materialien sind besonders die feinen Partikel hervorzuheben.

Die Gefährdungen werden in industriellen Anlagen in der Regel vermieden durch geeignetes Einhausen von Laser und Bearbeitungsobjekt (Werkstück) sowie den mechanischen Anlagen (beispielsweise Knickarmroboter, Portale), die die relative Lage von Strahl und Werkstück programmgemäß einstellen und verändern, in einer Kabine, die während der Lasereinwirkung weder Strahlung noch ablatiertes Material nach außen lässt, wobei im allgemeinen eine geeignete Absaugung, gegebenenfalls mit Filtern versehen, verwendet wird.

Die aus dem Stand der Technik bekannten derartigen Einhausungen lassen sich in passive und aktive Einhausungen bzw. Laserschutzwände einteilen.

Die passiven Laserschutzwände, einschließlich der Fenster und Türen, sind so konzipiert, dass sie über eine vorgegebene Zeit der vollen Laserbestrahlung, wie sie bei einer fehlerhaften Ausrichtung des Strahls auftreten kann, ohne Beeinträchtigung der Schutzwirkung widersteht.
Nachteilig ist, dass Kabinen, bestehend aus passiven Laserschutzwänden, nicht nur relativ viel Platz einnehmen, sondern hohe Masse haben und hohe Kosten bei Investition und Betrieb verursachen. Auch die notwendigen Absaugleistungen (und als Folge die Absaugkosten) steigen mit der Kabinengröße an. Als Folge der Größe und der hohen Masse sind die Lasermaterialbearbeitungsanlagen nur mit relativ großem Aufwand an verschiedenen Orten einsetzbar. Diese Nachteile machen sich besonders bei mittelgroßen Laserbearbeitungsanlagen (im Leistungsbereich von etwa 100 W bis etwa 1 kW) bemerkbar, die man gerne flexibel in Bearbeitungsketten integrieren möchte.

Im Unterschied zu den genannten passiven Laserschutzwänden verhindern aktive Laserschutzwände durch ihre Dimensionierung und Materialeigenschaften nicht nur passiv ein Durchdringen der Laserstrahlung, sondern sie bewirken ein Abschalten der Laserstrahlung unmittelbar nach dem Auftreffen der Laserstrahlung auf die Laserschutzwand.
Damit können die Anforderungen an die Kabinenwände (einschließlich Fenstern und Türen) durch Reduzierung der maximal möglichen Strahlungsdeposition bis zu einer Sicherheitsabschaltung herabgesetzt werden. Durch die Reduktion der Wandstärke oder/und den Einsatz anderer Wandmaterialien können die Wandmasse und die Kosten bei konstanter Kabinengeometrie reduziert werden. Darüber hinaus können veränderte Kabinenkonstruktionen eingesetzt werden, bei denen die Wände mehr oder weniger flexibel nur die unmittelbare Umgebung des jeweiligen Bearbeitungsortes umschließen.

Zu aktiven Laserschutzwänden sind aus dem Stand der Technik eine Vielzahl von Lösungen bekannt.

In der DE G 89 08 806 U1, die von einem Stand der Technik ausgeht, nach dem der Laserbearbeitungsvorgang aufmerksam durch den Werker beobachtet werden muss, um bei Unregelmäßigkeiten den Notschalter zu betätigen, wird eine Schutzvorrichtung für eine Laserstrahl-Bearbeitungsmaschine beschrieben, bestehend aus den Arbeitsbereich umgebenden, zumindest teilweise bewegbaren Seitenwänden und einer Notausschaltung. In die Seitenwände ist ein mit der Notausschaltung als Schmelzsicherung wirkender stromdurchflossener Leiter z.B. in Form von Schleifen integriert. Vorteilhaft soll der Leiter zwischen Verbundscheiben, d.h. einer inneren durchsichtigen Kunstharzscheibe und einer äußeren Glasscheibe mäanderförmig verlegt sein. Die Leiter mehrerer Seitenwände können in Reihe geschaltet oder einzeln an die Notausschaltung angeschlossen werden.

In der EP 0 157 221 B1 ist eine Laserschutzvorrichtung offenbart, die sich von einer Abschirmung nach der GB-A 1595201, gebildet von zwei voneinander beabstandeten Schichten, die eine geschlossene Kammer definieren und wobei eine der Schichten durch den Laser zerstört werden kann, dadurch unterscheidet, dass die Abschirmung transportabel und frei stehend ist und die Kammer mit einem gasförmigen Medium gefüllt ist und ein Sensor vorhanden ist, der auf den Gasfluss infolge der Zerstörung der einen Schicht reagiert.
Der Druck in der Kammer kann vom atmosphärischen Druck abweichen (auch Unterdruck) und der Sensor reagiert auf Druckänderungen in der Kammer.
Alternativ kann die Kammer ein detektierbares Gas beinhalten und der Sensor detektiert dieses Gas. Der Sensor kann mit einer Alarmeinrichtung oder einer Abschaltung verbunden sein.

In der DE 199 40 476 A1 wird eine Laserschutzwand aufgezeigt, die mindestens einen die Laserstrahlung detektierenden Sensor aufweist, z.B. einen Wärmesensor oder einen Lichtsensor.

Die DE 36 38 874 A1 betrifft ein zweischichtiges Sichtfenster in einer Schutzvorrichtung mit einem elektrischen Leiter, der zwischen den Schichten verläuft. Wenn der Laser ein Loch in die innere Schicht brennt, so schmilzt der Leiter, der Teil einer Sicherheitsabschaltung zur Steuerung der Laserquelle ist, durch und der Laser wird abgeschalten, bevor er auch die äußere Schicht durchdringen kann.

Alternativ wird die Änderung des Widerstandes des Leiters infolge einer Temperaturerhöhung gemessen und ein akustisches oder optisches Warnsignal erzeugt. Der Leiter ist z.B. in sinusförmiger oder schlangenförmiger Form angeordnet mit Abständen kleiner dem Strahldurchmesser im Auftreffpunkt.

Eine artgleiche Vorrichtung betrifft die US-A 4,710,606.

Aus der EP 0 321 965 B1 ist eine Laserschutzwand aus einem transparenten Material bekannt, welche die auftreffende Laserstrahlung zu einem integrierten Illuminationsmessmittel, z.B. eine Photodiode leitet, das ein elektrisches Signal abhängig von der Illuminationsintensität erzeugt
Eine solche Laserschutzwand hat den Vorteil, dass kein feinmaschiges Netz von Leitungsdrähten erforderlich ist und dass es nicht zur Zerstörung und damit zum Ersatz kommen muss.

Alle vorgenannten aktiven Laserschutzwände haben die Gemeinsamkeit, dass sie ein laserstrahlungssensitives Element aufweisen, d.h. ein Element, welches bei Beaufschlagung mit der Laserstrahlung eine Zustandsänderung erfährt, die das Abschalten des Lasers zur Folge hat.
Das laserstrahlungssensitive Element bildet innerhalb oder auf einer Seite der Laserschutzwand entweder eine geschlossene Fläche oder eine rasterförmige bzw. netzartige Fläche, wobei die Rasterabstände bzw. die Netzmaschengröße nicht größer dem Strahldurchmesser eines gegebenenfalls auftreffenden Laserstrahls ist.

Bei fast allen der aufgezeigten Lösungen wird das laserstrahlungssensitive Element, z.B. eine Schmelzsicherung oder eine kammerbegrenzende Schicht zumindest partiell bei der Beaufschlagung mit der Laserstrahlung zerstört, so dass zur Wiederherstellung der Sicherheit die Laserschutzwand ausgetauscht werden muss.

Die Lösungen, in denen das laserstrahlungssensitive Element, z.B. eine transparente Fläche zur Weiterleitung der Laserstrahlung zu einem Strahlungssensor nicht zerstört wird, erscheinen in ihrer Zuverlässigkeit fragwürdig.

Es ist die Aufgabe der Erfindung, eine Laserschutzvorrichtung bestehend aus wenigstens einer Laserschutzwand zu schaffen, die zuverlässig wirkt und die nach dem Auftreffen von Laserstrahlung zur Aufrechterhaltung der uneingeschränkten Sicherheit ersetzt werden muss.

Der Erfindung liegt die Überlegung zugrunde, die beiden Funktionen, die eine aktive Laserschutzwand hat, nämlich erstens beim Auftreffen von Laserstrahlung das unmittelbare Abschalten des Lasers zu bewirken und zweitens einen passiven Laserschutz zu gewährleisten, um die bis um Abschalten auftreffende Strahlungsmenge zu deponieren, durch gegenständlich getrennte Mittel zu erfüllen, d.h. mit einem Mittel für den aktiven Schutz und einem Mittel für den passiven Schutz.

Als Mittel für den passiven Schutz kann jede denkbare passive Laserschutzwand Verwendung finden, die so konzipiert ist, dass Sie die auftreffende Strahlungsmenge bis zur Sicherheitsabschaltung deponieren kann.
Bevorzugt ist sie so ausgelegt, dass sie dadurch keine irreversiblen Veränderungen erfährt.

Als Mittel für den aktiven Schutz wird eine Folie vorgesehen, die entweder selber ein lasersensitives Element darstellt oder in bzw. auf welche ein lasersensitives Element ein- bzw. aufgebracht ist.

Die Folie, nachfolgend Laserschutzfolie genannt, wird erfindungsgemäß in Strahlungsrichtung vor der passiven Laserschutzwand angeordnet. Sie wird in der Regel beim Auftreffen von Laserstrahlung beschädigt und ist zur Wiederherstellung der Sicherheit anschließend auszutauschen. Hingegen muss die dahinter angeordnete Laserschutzwand nicht ausgetauscht werden, wodurch Kosten und Aufwand gespart werden. Im Vergleich zu allen aus dem Stand der Technik bekannten Lösungen aktiver Laserschutzwände ist eine Laserschutzvorrichtung, die gemäß der Erfindung aus einer passiven Laserschutzwand mit einer vorgeordneten Laserschutzfolie besteht, dauerhaft deutlich billiger und die Sicherheit ist schneller und einfacher wieder herstellbar.

Durch die Aufteilung der beiden erläuterten Funktionen der Laserschutzvorrichtung auf zwei gegenständlich getrennte Mittel entsteht ein weiterer Vorteil dadurch, dass nicht zwingend der gesamte Arbeitsraum des Lasers eingehaust werden muss.
D.h. um eine aus dem Arbeitsraum austretende Laserstrahlung in jedem Fall zu erfassen, wird man zwar den Arbeitsraum vollständig mit der Laserfolie einhüllen, allerdings muss der Laserschutzfolie nicht zwingend in jeder Raumrichtung, z.B. zur Werkhallendecke hin eine passive Laserschutzwand nachgeordnet sein, sondern nur in den Bereichen, in denen die Laserstrahlung in einer gefährdenden Intensität auf Personen oder empfindliche Objekte treffen könnte.
Für einige Ausführungen der Laserschutzfolie muss nicht bereits bei der Herstellung die Flächengröße einer zuzuordnenden passiven Laserschutzwand beachtet werden, weshalb sie auch unkonfektioniert vorrätig gehalten werden kann und im Bedarfsfall auf die erforderliche Größe zugeschnitten werden kann.
Dadurch wird der Austausch noch billiger und unkomplizierter.
Es ist von Vorteil, dass die uneingeschränkte Funktionsfähigkeit der Laserschutzfolie zu jedem Zeitpunkt erkennbar ist. Das kann für die einzelnen Ausführungen der Laserschutzfolie entweder durch eine augenfällige Zerstörung gegeben sein oder durch ein Sensorsignal angezeigt werden.

Die Erfindung soll nachfolgend anhand von Zeichnungen an mehreren Ausführungsbeispielen näher erläutert werden.
Hierzu zeigt:
- Fig. 1: eine Prinzipskizze für ein erstes Ausführungsbeispiel einer Laserschutzvorrichtung
- Fig. 2: eine aus mehreren Laserschutzvorrichtungen gebildete Laserschutzkabine

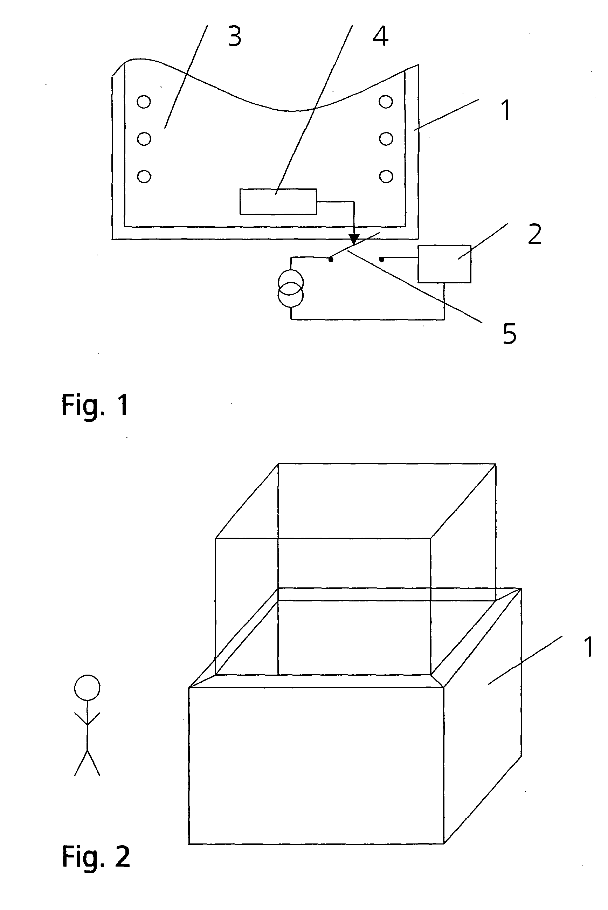

Eine erfindungsgemäße Laserschutzvorrichtung (Fig. 1), die das Austreten eines Laserstrahles einer Lasermaterialbearbeitungsanlage aus ihrem Arbeitsbereich verhindern soll, umfasst eine passive Laserschutzwand 1, eine Laserschutzfolie 3, wenigstens einen Sensor 4 sowie einen Schwellwertschalter 5, über den ein Laser 2 der Lasermaterialbearbeitungsanlage mit einer Energiequelle 6 verbunden ist.

Mehrere solche Laserschutzvorrichtungen können gemeinsam zu einer Laserschutzkabine zusammengefügt werden wodurch mehrere Schwellwertschalter 5 in Reihe zwischen dem Laser 2 und der Energiequelle 6 geschalten sind.

In einem ersten Ausführungsbeispiel soll die Laserschutzfolie 3 eine dünne Folie zwischen 0,2 und 2 mm Dicke aus einem dehnbaren Material sein und in einem gedehnten Zustand vor oder auf eine dahinter befindliche passive Laserschutzwand 1 gespannt sein. Auf der Laserschutzfolie 3 ist wenigstens ein Dehnungssensor vorhanden, über den die Zugspannungen erfasst werden.
Bevorzugt ist die Laserschutzfolie 3 in nur einer Richtung gedehnt und der Dehnungssensor ist ein Dehnmessstreifen, der in Dehnungsrichtung auf der Folie klebt.
Beim Auftreffen der Laserstrahlung wird die Folie im Auftreffpunkt zerstört und es bildet sich beginnend vom Auftreffpunkt ein zur Dehnungsrichtung im Wesentlichen senkrecht verlaufender Riss aus, der zur Reduktion der Zugspannung in der Folie führt. Bei Unterschreitung eines vorgegebenen Schwellwertes für die Zugspannung wird über einen mit dem Dehnmessstreifen und dem Laser 2 in Verbindung stehenden Schwellwertschalter 5 der Laser 2 ausgeschaltet.
Da die Laserschutzfolie 3 lediglich durch Halteelemente kraft- oder formschlüssig vor der passiven Laserschutzwand 1 gespannt ist, kann durch einfaches Lösen der Halteelemente die zerstörte Laserschutzfolie 3 entfernt und durch eine neue ersetzt werden. Da die Laserschutzfolie 3 in beliebiger Größe konfektioniert werden kann, kann eine passive Laserschutzwand 1 durch eine einzelne große Laserschutzfolie 3 oder aber durch eine Vielzahl entsprechend kleiner Laserschutzfolien 3 abgedeckt werden. Letzteres vereinfacht den Austausch.
Eine Laserschutzvorrichtung mit einer Laserschutzfolie 3 nach dem ersten Ausführungsbeispiel ist besonders vorteilhaft, um Laserschutzkabinen in vielfältiger Gestalt zu bilden, die den Arbeitsraum der Lasermaterialbearbeitungsanlage vollständig einhausen.
Grundsätzlich besteht eine solche Laserschutzkabine aus einer Vielzahl von Seitenwänden gleicher Höhe, die senkrecht stehend über ihre Längsseiten miteinander verbunden eine geschlossene Grundfläche bilden sowie einer die Laserschutzkabine noch obenhin verschließenden Decke. In die Seitenwände sind eine Tür und häufig auch Fenster integriert.
Um die Kabine auf den Arbeitsraum der Lasermaterialbearbeitungsanlage in ihrer Grundfläche optimiert anzupassen, ist es häufig sinnvoll, diese in unterschiedlichen Breiten auszuführen.
Bei Laserschutzwänden nach dem Stand der Technik ergibt sich dadurch das Problem, dass für jede Breite ein Ersatz vorrätig sein muss, um im Bedarfsfall die Sicherheit umgehend wieder herstellen zu können.
Eine Laserschutzfolie 3 nach dem ersten Ausführungsbeispiel kann unkonfektioniert als Meterware auf einer Rolle deponiert werden und je nach Bedarf unmittelbar vor Verwendung zugeschnitten und mit einem Dehnmessstreifen präpariert werden.

Die Laserschutzfolie 3 kann auch ohne eine dahinter angeordnete passive Laserschutzwand 1 als alleinige Decke verwendet werden. Bevorzugt wird sie auch hier nur in einer Richtung gedehnt, unabhängig von der Form der Deckfläche, die grundsätzlich gleich der Form der Grundfläche ist. Die Laserschutzkabine wird damit in ihrer Masse reduziert, wobei trotzdem sicher gestellt ist, dass keine bei der Bearbeitung entstehenden Gase nach außen dringen können und der Laser 2 abgeschalten wird, wenn Laserstrahlung durch Fehlsteuerung den Arbeitbereich verlässt. Häufig ist die sich über der Decke der Laserschutzkabine befindende Werkhallendecke soweit weg vom Laser 2, dass die Strahlungsintensität beim Auftreffen auf die Werkhallendecke keine Schäden verursachen kann.
Für Laserbearbeitungsanlagen, deren Arbeitsraum wesentlich höher ist als ein Mensch groß ist, für den der Schutz insbesondere vorgesehen ist, kann eine seitliche Laserschutzwand auch so ausgeführt werden, dass die passive Laserschutzwand 1 z.B. in einer Höhe von 2,20 m endet und verlängernd durch einen offenen Rahmen die Gesamthöhe gebildet wird, wobei in dem offenen Rahmen die Laserschutzfolie 3 geklemmt ist.
Die Laserschutzfolie 3 muss nicht an Halteelementen, die sich an der passiven Laserschutzwand 1 befinden, gespannt sein, sondern kann auch z.B. in einem freistehenden Rahmen vor der passiven Laserschutzwand 1 aufgestellt sein.

In einem zweiten Ausführungsbeispiel sind in die Laserschutzfolie 3 wenigstens eine elektrische Leiterbahn eingebettet oder aufgebracht. Die Leiterbahnen sind in einer konfektionierten Laserschutzfolie 3 so verlegt, dass der Abstand zwischen zwei benachbarten Leiterbahnen immer kleiner ist als der Durchmesser eines Laserstrahles im Auftreffpunkt, um sicher zu stellen, dass, egal wo der Laserstrahl auf die Laserschutzfolie 3 auftrifft, die Leiterbahn getroffen wird. Die Leiterbahnen sind über Kontakte jeweils einen Endes an eine Strom- oder Spannungsquelle und anderen Endes an ein Messgerät angeschlossen.
Pro Laserschutzfolie 3 reicht grundsätzlich eine Leiterbahn aus. Sie ist bevorzugt sinus- oder mäanderförmig verlegt.
Trifft nun ein Laserstrahl auf eine Leiterbahn, so ändert sich zuerst durch die Erwärmung deren Widerstand und kommt bei weiterer Strahlungsbeaufschlagung zum Schmelzen. Die Widerstandserhöhung bzw. der Strom- oder Spannungsabfall werden gemessen und bei Über- bzw. Unterschreitung eines vorbestimmten Schwellwertes wird der Laser 2 über einen Schwellwertschalter 5 abgeschalten.

Anstelle von elektrischen Leiterbahnen sind in einem dritten Ausführungsbeispiel in die Laserschutzfolie 3 optische Fasern eingebettet. Um vom Einfallswinkel des Laserstrahles unabhängig die Strahlung zu einem mit den Faserenden in Verbindung stehenden Strahlungsdetektor zu leiten, weist die Faser einen, einen Faserkern umschließenden Fasermantel auf. Dieser Fasermantel wird beim Auftreffen der Laserstrahlung örtlich beschränkt zerstört, so dass die Laserstrahlung in die optische Faser eintreten und zum Strahlungssensor geleitet werden kann. Damit die Strahlung gut in die Fasern eingekoppelt werden kann, können diese in einer Stricktechnik verlegt sein, so dass sie einen großen Winkel zur Oberfläche der Laserschutzfolie 3 einnehmen.

In einem vierten Ausführungsbeispiel sollen in die Laserschutzfolie 3 eingebettete optische Fasern mit einer modulierten Laserstrahlung gespeist werden, die von einem Sensor detektiert wird. Bei Zerstörung der optischen Fasern, die hier insbesondere Kunststofffasern sind, wird eine Änderung des detektierten Signals wahrgenommen.

Eine erfindungsgemäße Laserschutzfolie kann anstelle von elektrischen oder optischen Leiterbahnen auch elektrische oder optische leitende Schichten umfassen.

So soll z.B. einfünftes Ausführungsbeispiel für eine Laserschutzfolie 3 eine Kunststofffolie sein, die einerseits mit einer elektrisch leitfähigen Schicht und andererseits mit elektrischen Leiterbahnen versehen ist. Durch beide wird ein Strom geführt bzw. an beide ist eine Spannung angelegt. Beim Auftreffen der Laserstrahlung schmilzt die dazwischen befindliche Kunststofffolie örtlich, wodurch die Schicht und die Leiterbahn in Kontakt miteinander kommen und ein Kurzschluss bewirkt wird.

In einem sechsten Ausführungsbeispiel ist das Material der Laserschutzfolie 3 aus einem für die Laserstrahlung transparenten Material und beidseitig mit einer hoch reflektierenden Schicht beschichtet. Ein auftreffender Laserstrahl zerstört die hochreflektierende Schicht aufgrund seiner Energiedichte im Auftreffpunkt, wird dann im transparenten Material gestreut und trifft auf einen im transparenten Material integrierten Strahlungssensor.

Bei den Ausführungsbeispielen zwei bis fünf handelt es sich grundsätzlich um Laserschutzfolien, bei denen die Folie selbst nur eine Schicht bildet. Sie unterscheiden sich zu einer Laserschutzfolie 3 nach dem ersten Ausführungsbeispiel dadurch, dass zusätzliche Elemente vorhanden sind und dass die Laserschutzfolie 3 auf die passive Laserschutzwand 1 aufgeklebt oder anderweitig stoffschlüssig aufgebracht sein kann. Das kann zwar beim Austausch aufwendiger sein, aber es werden dadurch keine zusätzlichen Halte- und Spannelemente notwendig. Die Laserschutzfolie 3 kann an beliebig gekrümmte passive Laserschutzwände 1 angelegt werden.

Nach einem siebenten Ausführungsbeispiel soll die Laserschutzfolie 3 eine Doppelfolie sein, die durch wenigstens eine gasgefüllte Hohlraumkammer gebildet wird, wobei die seitenbegrenzenden Folienschichten vorteilhaft mehrfach über Stege miteinander verbunden sind, um die Hohlraumkammern auch bei Überdruck flach zu halten. In jeder Hohlraumkammer bzw. mit jeder Hohlraumkammer verbunden ist ein Druckaufnehmer.
Der Gasdruck in den Hohlkammern ist höher als der Umgebungsdruck, so dass bei Zerstörung einer Hohlkammer der Innendruck sinkt und bei Unterschreitung eines Schwellwertes ein mit dem Druckaufnehmer verbundener Schwellwertschalter 5 den Laser 2 abschaltet.
Bevorzugt wird eine Laserschutzfolie 3 durch nur eine Hohlkammer gebildet. Damit wird nur ein Druckaufnehmer notwendig.

Es ist auch denkbar, dass bei der Zerstörung der unter Druck stehenden Hohlkammer entstehende Schallsignal zu messen und als Signal zur Abschaltung des Lasers 2 zu nutzen. Ein solches Schallsignal ist auch bei der Zerstörung einer gespannten Laserschutzfolie 3 gemäß dem ersten Ausführungsbeispiel detektierbar und könnte auch dort als Schaltsignal verwendet werden.

In einem achten Ausführungsbeispiel sollen die Hohlkammern mit einem Spezialgas gefüllt sein, welches bei Zerstörung austritt und detektiert werden kann. Hierfür ist es von Vorteil, wenn die Hohlkammer ein möglichst großes Kammervolumen hat, damit das austretende Gas möglichst schnell von einem Gasdetektor detektiert werden kann.

Insbesondere Laserschutzfolien 3 nach dem siebenten und achten Ausführungsbeispiel eröffnen die Möglichkeit für entfaltbare frei stehende Kabinen. Hierzu bestehen bevorzugt die einzelnen, z.B. vier längsseitig miteinander verbundene Seitenwände jeweils aus nur einer Hohlraumkammer mit jeweils einem Einlassventil, über welches die Hohlraumkammern erst am Aufstellort mit Gas befüllt werden. Im Gefahrenbereich, der in der Regel nicht wesentlich in der Höhe über die maximale Größe einer Person reicht, werden den Laserschutzfolien 3 passive Laserschutzwände 1 angestellt.

Eine solche Laserschutzkabine ist insbesondere für einen zeitweiligen Einsatz von Lasern an bestimmten Orten eine kostengünstige und zeitsparende Schutzmöglichkeit.

In einem neunten Ausführungsbeispiel ist die Laserschutzfolie 3 eine sogenannte Blasenfolie, d.h. sie besteht aus einer Vielzahl kleiner Hohlkammern. Hier entstehen im Unterschied zum ersten und siebenten Ausführungsbeispiel eine Serie von akustischen Signalen, wenn sich ein fehlgesteuerter Laserstrahl über die Laserschutzfolie 3 bewegt. Damit Defekte an den einzelnen Kammern bzw. Blasen nicht unbemerkt bleiben, sind diese vorteilhaft untereinander durch dünne Kanäle oder durch schwach gasdurchlässige Wände getrennt. Z.B. können die Blasen in einer Wabenstruktur mit teildurchlässigen Trennwänden angeordnet sein. Während sich beim plötzlichen Auftreffen von Laserstrahlung der Kammerdruck so stark erhöht, dass eine Schockwelle ausgelöst wird, die auch umliegende Kammern bzw. Blasen zerstört, macht sich ein beliebig anderer Defekt an einer Kammer oder einer Blase bemerkbar, indem durch den stattfindenden Druckausgleich der Druck in der gesamten Laserschutzfolie sinkt.

Wichtig ist für eine Laserabschaltung in Folge von akustischen Signalen, dass sich diese Signale signifikant von den Geräuschen bei der Lasermaterialbearbeitung unterscheiden. Die Signale werden an einem bzw. mehreren geeignet angeordneten Mikrophonen nachgewiesen und lösen eine Abschaltung aus. Dabei müssen die Mikrophone so verteilt sein, dass in allen Fällen mindestens ein Mikrophon hinreichend schnell nach dem Auftreffen des Laserpulses durch Luft-oder Körperschall erreicht wird.

Bezugszeichenliste
- 1: passive Laserschutzwand
- 2: Laser
- 3: Laserschutzfolie
- 4: Sensor
- 5: Schwellwertschalter
- 6: Energiequelle

## Patentansprüche

1. Laserschutzvorrichtung mit Sicherheitsabschaltung, umfassend eine passive Laserschutzwand (1), die die Strahlungsenergie einer auftreffenden Strahlung eines Lasers (2) einer Lasermaterialbearbeitungsanlage deponiert, **dadurch gekennzeichnet,**
**dass** eine in Richtung der Laserstrahlung vorgeordnete Laserschutzfolie (3) vorhanden ist, die eine beim Auftreffen von Laserstrahlung detektierbare Veränderung erfährt sowie wenigstens ein Sensor (4), der über einen Schwellwertschalter (5) mit dem Laser (2) verbunden ist, um bei Überschreitung bzw. Unterschreitung eines Schwellwertes durch das empfangene Detektorsignal den Laser (2) abzuschalten.

2. Laserschutzvorrichtung nach Anspruch 1, **dadurch gekennzeichnet,**
**dass** die Laserschutzfolie (3) aus einem dehnbaren Kunststoff besteht und in einem gedehnten Zustand fixiert ist und der Sensor (4) ein Dehnungssensor ist.

3. Laserschutzvorrichtung nach Anspruch 2, **dadurch gekennzeichnet,**
**dass** die Laserschutzfolie (3) in nur eine Richtung gedehnt ist und der Dehnungssensor ein Dehnmessstreifen ist, der in Dehnungsrichtung aufgeklebt ist, so dass bei Auftreffen von Laserstrahlung die Laserschutzfolie (3) im Auftreffpunkt zerstört wird und sich ein Riss senkrecht zur Dehnungsrichtung ausdehnt, der zu einem Unterschreiten einer als Schwellwert festgelegten Zugspannung führt.

4. Laserschutzvorrichtung nach Anspruch 1, **dadurch gekennzeichnet,**
**dass** die Laserschutzfolie (3) eine Folie mit wenigstens einer elektrische, Leiterbahn ist, an der eine Spannung angelegt bzw. in der ein Strom fließt und der Sensor ein Spannungs- bzw. Strommessgerät ist, so dass bei Auftreffen einer Laserstrahlung auf eine Leiterbahn diese schmilzt, so dass die Spannung zusammenbricht bzw. der Stromfluss unterbrochen wird.

5. Laserschutzvorrichtung nach Anspruch 4, **dadurch gekennzeichnet,**
**dass** die elektrischen Leiterbahnen in die Folie eingebettet sind.

6. Laserschutzvorrichtung nach Anspruch 4, **dadurch gekennzeichnet,**
**dass** die Leiterbahnen auf einer Seite der Folie aufgebracht sind.

7. Laserschutzvorrichtung nach Anspruch 6, **dadurch gekennzeichnet,**
**dass** die freie Seite der Folie mit einer elektrisch leitfähigen Schicht beschichtet ist, so dass beim Schmelzen der Folie in Folge des Auftreffens von Laserstrahlung ein Kurzschluss entsteht.

8. Laserschutzvorrichtung nach Anspruch 1, **dadurch gekennzeichnet,**
**dass** die Laserschutzfolie (3) eine Folie mit integrierten optisch leitenden Fasern ist, die aus einem Faserkern und einem Fasermantel bestehen und der Sensor ein optischer Sensor ist.

9. Laserschutzvorrichtung nach Anspruch 1, **dadurch gekennzeichnet,**
**dass** die Laserschutzfolie (3) aus einem für die Laserstrahlung transparenten Material besteht und beidseitig mit einer die Laserstrahlung reflektierenden Schicht versehen ist, so dass beim Auftreffen von Laserstrahlung im Auftreffpunkt die Schicht zerstört wird und die Laserstrahlung eingekoppelt wird, um zu einem Sensor (4) geführt zu werden, der ein optischer Sensor ist.

10. Laserschutzvorrichtung nach Anspruch 1, **dadurch gekennzeichnet,**
**dass** die Laserschutzfolie (3) eine Doppelfolie ist, die durch wenigstens eine gasgefüllte Hohlraumkammer gebildet wird.

11. Laserschutzvorrichtung nach Anspruch 10, **dadurch gekennzeichnet,**
**dass** die Hohlraumkammern mit einem speziellen Gas gefüllt sind und der Sensor (4) ein Gassensor ist.

12. Laserschutzvorrichtung nach Anspruch 10, **dadurch gekennzeichnet,**
**dass** in den Hohlraumkammern ein Überdruck besteht und der Sensor (4) ein Drucksensor ist.

13. Laserschutzvorrichtung nach Anspruch 10, **dadurch gekennzeichnet,**
**dass** die eine Hohlraumkammer bildende Doppelfolie über mehrere Stege miteinander verbunden ist, wodurch die Ausdehnung der Kammer über die Steghöhe beschränkt wird.

14. Laserschutzvorrichtung nach Anspruch 10, **dadurch gekennzeichnet,**
**dass** die Laserschutzfolie (3) eine Blasenfolie ist und der Sensor (4) ein akustischer Sensor ist.

15. Laserschutzvorrichtung nach Anspruch 1, **dadurch gekennzeichnet,**
**dass** die Laserschutzfolie (3) aus einem dehnbaren Kunststoff besteht und in einem gedehnten Zustand fixiert ist und der Detektor ein akustischer Sensor ist.

16. Laserschutzvorrichtung nach Anspruch 1, **dadurch gekennzeichnet,**
**dass** mehrere Laserschutzvorrichtungen zu einer Laserschutzkabine zusammengefügt sind.

17. Laserschutzvorrichtung nach Anspruch 16, **dadurch gekennzeichnet,**
**dass** die Laserschutzvorrichtungen jeweils eine Wand gleicher Höhe darstellen, die nebeneinander angeordnet die Umfangsfläche der Laserschutzkabine bilden und sich die Laserschutzfolie (3) in einem Rahmen gehalten über die gesamte Höhe erstreckt, während die passive Laserschutzwand (1) eine geringere Höhe aufweist.

18. Laserschutzvorrichtung nach Anspruch 17, **dadurch gekennzeichnet,**
**dass** die Laserschutzvorrichtungen eine Deckfläche der Laserschutzkabine begrenzen, die durch eine Laserschutzfolie (3) gebildet ist.

19. Laserschutzvorrichtung nach Anspruch 16, **dadurch gekennzeichnet,**
**dass** die Laserschutzfolien nach einem der Ansprüche 10 bis 13 ausgeführt und so miteinander verbunden sind, dass sie eine freistehende Kabine bilden, um die die passiven Laserschutzwände (1) angeordnet sind, um die Laserschutzkabine zu bilden.

20. Laserschutzvorrichtung mit Sicherheitsabschaltung, umfassend eine passive Laserschutzwand (1), die die Strahlungsenergie einer auftreffenden Strahlung eines Lasers (2) einer Lasermaterialbearbeitungsanlage deponiert, **dadurch gekennzeichnet,**
**dass** eine in Richtung der Laserstrahlung vorgeordnete Laserschutzfolie (3) vorhanden ist, die eine beim Auftreffen von Laserstrahlung detektierbare Veränderung bewirkt, sowie wenigstens ein Sensor (4), der über einen Schwellwertschalter (5) mit dem Laser (2) verbunden ist, um bei Überschreitung bzw. Unterschreitung eines Schwellwertes durch das empfangene Detektorsignal den Laser (2) abzuschalten.
